(19) Europäisches Patentamt
European Patent Office
Office européen des brevets

(11) **EP 2 131 468 B1**

(12) **EUROPEAN PATENT SPECIFICATION**

(45) Date of publication and mention
of the grant of the patent:
**28.07.2010 Bulletin 2010/30**

(51) Int Cl.:
***H02H 3/20*** *(2006.01)*    ***H02H 3/22*** *(2006.01)*
***G01R 15/04*** *(2006.01)*

(21) Application number: **08381019.2**

(22) Date of filing: **29.05.2008**

(54) **Combined device for electrical protection against transient, temporary and permanent overvoltages**

Kombinierte elektrische Schutzvorrichtung gegen transiente, zeitliche und verbreitete Überspannungen

Dispositif combiné de protection électrique contre les surtensions transitoires et étendues

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**09.12.2009 Bulletin 2009/50**

(73) Proprietor: **Cirprotec, S.L.**
**08223 Terrassa (ES)**

(72) Inventor: **MARTIN PEIDRÓ, José Antonio**
**08223, TERRASSA (ES)**

(74) Representative: **Esteban Perez-Serrano, Maria Isabel**
**UDAPI & Asociados**
**Explanada 8**
**28040 Madrid (ES)**

(56) References cited:
**EP-A- 0 631 371    EP-A- 1 401 075**
**EP-A- 1 701 424    WO-A-2005/074241**

**Description**

## OBJECT OF THE INVENTION

The object of this invention is a combined device for low voltage electrical protection against transient, temporary or permanent overvoltages, designed to be installed preferably at the point of connection of the user's installation with the general low voltage distribution network.

It is considered overvoltage any voltage having a value, either peak or r.m.s., exceeding the nominal value of the system. International standards provide the following information:

Transient overvoltages have generally an impulse waveshape and a very short duration, they may be oscillatory or not, but usually they are highly damped, normally lasting less than a few milliseconds. In general they are caused by atmospheric discharges, electrical network switchings and actuation of protective devices such as fuses.

Temporary overvoltages are defined as those which occur at a given location and are of relatively long duration, usually less than a few minutes, longer periods may be considered to be permanent overvoltages. They are usually caused by switching operations, non linearity in the network, sudden consumption reductions and breakages or bad connection of the neutral conductor.

The present invention combines in a single device a circuit which protects against transient overvoltages as well as a circuit protecting against temporary and permanent overvoltages. The combined device works in association with commercial electromechanical releases, usually shunt or under-voltage releases which cause an associated switching device switch to open when there is a temporary or permanent overvoltage in the supply voltage for a period exceeding the established time. Opening the switching device, leaves the installation and loads connected downstream to it without supply, avoiding their damage or destruction.

When the overvoltage is temporary or permanent the device of the present invention has means which ensure that the total time elapsing from the start of the overvoltage to the opening of the switching device varies according to the overvoltage level. The greater the overvoltage, the less the delay time in activating the breaking device will be, in this way ensuring that the loads dissipate a power which is similar or lower in the margin of overvoltages considered. The use of a variable actuation time avoids unwanted tripping, which would needlessly leave the user without service.

The actuation signal generated by the combined protection device and applied to the electromechanical release joint to the switching device, adopts values which cause the switching device to open when the supply voltage exceeds a predetermined value.

The device which is the object of the invention may be used in both single phase and three-phase installations, with the exception of minor construction variants.

Therefore, this invention is circumscribed within the scope of devices which, associated with commercial switching devices such as circuit-breakers, permit protection against transient, temporary and permanent overvoltages.

## BACKGROUND TO THE INVENTION

To date there are devices on the market which only protect against transient overvoltages. The use of such devices has been generalised for many years, and usually use electronic components such as metal oxide varistors and/or gas arresters and configurations adapted to the different supply systems (TT, TN, IT) in single phase and three-phase networks. These devices may be damaged or may be out of service when temporary overvoltages of either a long or permanent duration occur, as they are not usually constructed to withstand this type of overvoltage.

The existence of protective devices against temporary and permanent overvoltages such as, for example, patent ES 2170671 B1, which depending on its embodiment, may give rise to one or several of the following problems:

-    The devices may be damaged by transient overvoltages as they do not include specific internal protection means which limits their value.
-    These devices are frequently associated with a residual current operated circuit-breaker as a switching element or they form an intrinsic part of it, if the protection is made causing a leakage current to earth the devices will not be applicable when this is not available, they will not act adequately when there is a resistance with a high value or the actuation times may vary, depending on the resistance thereof. In other cases the residual current is caused by placing the device between the input and output of the residual current operated circuit-breaker (bridging), this system interrupts the supply to the loads, however it does not achieve the galvanic insulation between input and output required by standards, and this lack of isolation may cause safety problems both for users as well as the installation. Another disadvantage to be considered is the case of installations requiring the use of various residual current operated circuit-breakers, as in order to provide total protection the cost and space required would considerably increase.

It is known in the state of the art the protection device disclosed in EP 1401075 wherein is disclosed an overvoltage protection which has a first comparator providing an internal signal voltage (Us) when the network voltage (Un) is above a permissible limit value, a time delay stage providing a modified signal voltage (U's) and a second comparator providing a release signal voltage (Ua) when the modified signal voltage is above a reference value (U2).

The existence is also known of combined protection devices for transient and permanent overvoltages with automatic reconnection such as that described in the patent EP 1701424 A1, this device is associated with a remote control unit which acts on a switching device which disconnects the supply voltage of the loads when there is a permanent overvoltage, the combined device also acts on the remote control unit reconnecting the cut switching device when the supply voltage returns to acceptable values.

In order to ensure reconnection of the switching devices special external electromechanical devices are necessary or switching devices are directly used which incorporate internally the means required to make the reconnection; the complexity of the systems indicated mean that they are expensive and only a few manufacturers of switching devices provide some of these options. Conversely, the combined device which is the object of the invention acts on commonly used, low cost switches of the type supplied by all manufacturers of switching devices.

As a result of the situation described overvoltage protection systems with automatic reconnection are used almost exclusively in installations where a high degree of service continuity is required, for example in second residences or isolated installations.

Another very important point to be taken into account is the location occupied by the combined protection device with automatic reconnection within the electrical installation. It always receives voltage supply even when a permanent power overvoltage causes the opening of the switching device. The actuation of the switching device protects the loads; however, the combined device is required to withstand any possible disturbance from the electrical network.

Another disadvantage of known protection devices, with or without reconnection, is the use of the peak value of the sine wave input signal in order to determine whether there is a overvoltage or not, this method may at times be erroneous as it is based on the theoretic ratio Vrms = Vpk / $\sqrt{2}$; this ratio is certain for perfect sine wave signals, however it would fulfil distorted signals with a high harmonic content for example.
A peak voltage value may occur which does not exceed the established values however, which have a sufficiently high rms value to cause damage through overheating in some loads. In most networks for low voltage electricity distribution there are no such extreme cases, however they may have voltages with a high harmonic content.

There are some circumstances in which temporary overvoltages may occur which exceed those caused by a neutral failure, for example a earth-phase failure in the high voltage zone of the network and which is transmitted to the low voltage network. It is appropriate therefore to use a combined protection device against transient and temporary and permanent overvoltages which is separated from the network voltage once the switching device has actuated, which may act based on the rms and peak value of the network voltage, which takes up little space in home control and protection panels and which may use switching devices and common use releases in the market.

## DESCRIPTION OF THE INVENTION

The object of the combined device for low voltage electrical protection against transient, temporary and permanent overvoltages, seeks to overcome the aforementioned disadvantages and to achieve the following purposes:

- On one hand it protects against transient, temporal and permanent overvoltages.
- It also endeavours to ensure, in the case of operation of the device in the event of a overvoltage of any kind, that this device is not subject to voltage that is, that it is separated from the network following its operation and opening of the switching device.
- In addition it permits a variable and programmable actuation time which avoids unwanted tripping which would unnecessarily leave the user without power.
- It also takes up little space in the protection and control panels of homes and is able to use switching devices and releases which are commonly used in the market.
- It also permits both peak and rms values of the network voltage to be processed.

The scope is achieved by a protection system comprising a combined device according to claim 1

With the protection system it is possible to protect both installations and loads which are earthed as well as those which are not earthed or which have deteriorated.

The location and operation of the combined device ensures that when it has acted as a result of temporary or permanent overvoltage, and the switching device has been opened it remains without voltage supply and it is only necessary for it to withstand any overvoltage occurring for a few seconds at the most; this is an added advantage in respect of costs and device size as it would not be necessary to oversize the electric or electronic devices used.

The protective device is divided into one part which protects against transient overvoltages and another which protects against temporary and permanent overvoltages. The part which protects against - transient overvoltages is provided with an end of life indicator for the means of protection against these overvoltages, whereas the part which protects against temporary overvoltages is provided with a overvoltage indicator, an operating indicator and a test button.

The part which protects against - transient overvoltages uses electronic components as metal oxide varistors and /or gas arresters, presenting configurations adapted to the different supply systems (TT, TN, IT).

Since the part of the combined device which is the object of the invention which protects against - transient overvoltages is situated downstream from the circuit-breaker it facilitates the use of lower voltage varistors, with which lower residual voltages are obtained, and these are cheaper and take up less space.

In the case of the combined device with automatic reconnection, it is supplied by the network permanently, when there is a temporary or permanent overvoltage, which causes the -switching device to open, the loads are left without supply in order to protect them, however, the protection against - transient overvoltages remains connected to the network. In order to prevent breakdown or inability to use this protection, it is necessary to use varistors which permanently withstand the phase-phase voltage of the network.

In the combined device described herein, varistors with more reduced voltages than the phase-phase voltage are used, if considered appropriate, as the time they remain subject to temporary or permanent overvoltage is restricted by the actuation time of the device, which acts faster the greater the level of overvoltage. The importance of obtaining residual voltages which are as low as possible in the case of - transient overvoltages should be noted, as in this way not only are destruction or breakdown of the connected loads largely avoided but their useful lifetime is also increased and losses of service in the installations are also avoided. It is also important to consider that the voltage values of the varistors and the actuation times can be coordinated in the combined device, whereas if the protection against - transient overvoltages is external it is not controlled.

The part of the combined device, which is the object of the invention, which protects against temporary overvoltages, is provided with:

- A fuse, in case of breakdown this part separates the circuit of the network, preventing damage, its breakage causes the luminous indicators to turn off, and this enables the user to detect the loss of part of the protection so that the device can be replaced. The transient overvoltages protection continues to be operative.

- A first power supply in order to obtain continuous stabilised voltage for controller device supply. A suppressor diode is used as a voltage stabiliser device against ultra fast transient overvoltages, which carry out a dual function, stabilising the continuous voltage and limiting the ultra fast- transient overvoltages which could hot be completely eliminated by the protection against - transient overvoltages, this last function is necessary as the controllers only admit supply voltages which are slightly greater than those of the nominal voltages, even for extremely short time periods (ns).

At the output of this power supply a high frequency low-pass filter is added, as it is not unusual to receive other types of extremely high frequency disturbances through the network which may affect the controller function and which are not eliminated by the previous protections against transients.

- A second power supply which seeks to obtain a continuous stabilised voltage for the actuator supply.

A separate source from the previous one is used as it needs to have a greater voltage and current for the supply to the actuator.

- A driver which adapts the output signal of the controller to the voltage and current needs of the actuator.

- A voltage attenuator, at its output a signal is obtained proportional to the network voltage, adapted to the voltage levels admitted by the controller. Based on this, the controller acts when the overvoltage, either its rms or peak value, exceeds predetermined values and times.

At the attenuator output a protection is added against ultra fast transient overvoltages and a high frequency low pass filter for the same reasons as in power supply 1.

- An optical indicator of the end of the - transient overvoltage protection's useful lifetime.

- A luminous indicator which is activated when there is any overvoltage, acting when the controller sends an activation signal to the driver.

- A luminous indicator, which indicates the presence of voltage at the input to the combined device as well as correct operation of the controller.

As indicated, the combined device achieves switching device actuation in times which are reduced according to the input voltage, although not in a linear manner.

Relatively longer actuation delay times are permitted for small network voltage increases, which from experience to date do not damage the customary loads in an electric installation. In this way unnecessary disconnections are avoided which would cause the loss of service in the installation, which may cause further conflicts than those it is intended to avoid.

The operation of the combined protection device for three-phase networks is basically the same as in the single phase case, suing the protection against - transient overvoltages for three-phase configuration, changing some minor aspects of the circuits and power supplies of the part protecting against temporary and permanent overvoltages.

## DESCRIPTION OF THE FIGURES

In order to complete the description below and to assist in a better comprehension of its characteristics, the present descriptive report is accompanied by a set of plans with figures representing in an illustrative, but not restrictive, way the most significant details of the invention.

Figure 1 shows a diagram of blocks with the preferred location of the combined protection device in the single phase electrical installation, its association with the electromechanical switch, switching and control switches and loads.

Figure 2 represents a simplified internal diagram of blocks with the elements which make up the combined overvoltage device.

Figure 3 shows an internal diagram of blocks of the combined protection device.

Figure 4 shows a preferred diagram of an embodiment for single-phase network. Actuation on a shunt release.

Figure 5 shows the actuation times and voltages.

Figure 6 shows a diagram for actuation on an under-voltage.

Figure 7 shows a configuration of the combined device for three-phase networks.

Figure 8 shows a detailed diagram of the combined protective device for three-phase networks and in particular the part which protects against long term temporary or permanent overvoltages in the case of actuation on a shunt release.

Figures 9 and 10 show the form which the SD+ voltage would adopt in two of the possible extreme cases.

Figure 11 show the average value (volts) growing from a possible sequence of impulses to be applied.

Figure 12 shows two possible impulse sequences, the upper one having a duty cycle of 10% and the lower with a duty cycle of 90%.

## PREFERRED EMBODIMENT OF THE INVENTION

In the light of the figures below, a preferred embodiment of the proposed invention is described.

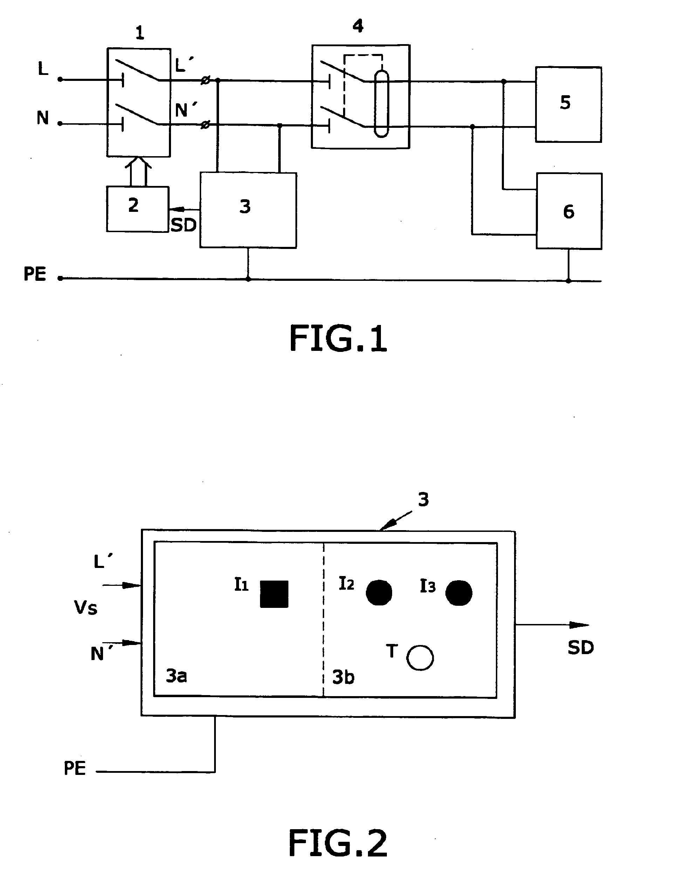

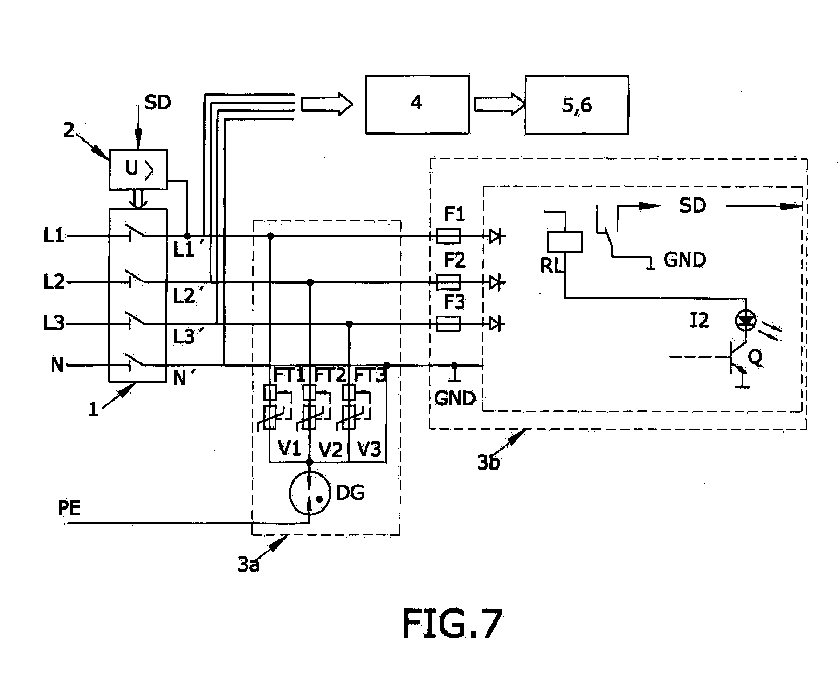

Figure 1 shows the location of the combined protection device for a single phase network with TT configuration being equally applicable to three-phase networks (figure 7) and easily adaptable to TN or IT networks. It may be seen that the combined protection device (3) is located downstream from a switching device, for example a circuit-breaker (1), and before a residual current operated circuit-breaker (4) to which the loads are connected downstream without earth (5) and with earth (6). The combined protection device (3) issues a trip signal (TS) to an electromechanical switch (2).

Figure 2 shows how the combined protection device (3) is provided with one part protecting against - transient overvoltages (3a), and another part protecting temporary and permanent overvoltages (3b).

The part protecting against - transient overvoltages (3a) is provided with an indicator (I1) with final indication of protective means against transient overvoltages whereas the part protecting temporary and permanent overvoltages (3b) is provided with a overvoltage indicator (I2) and another operating indicator (I3).

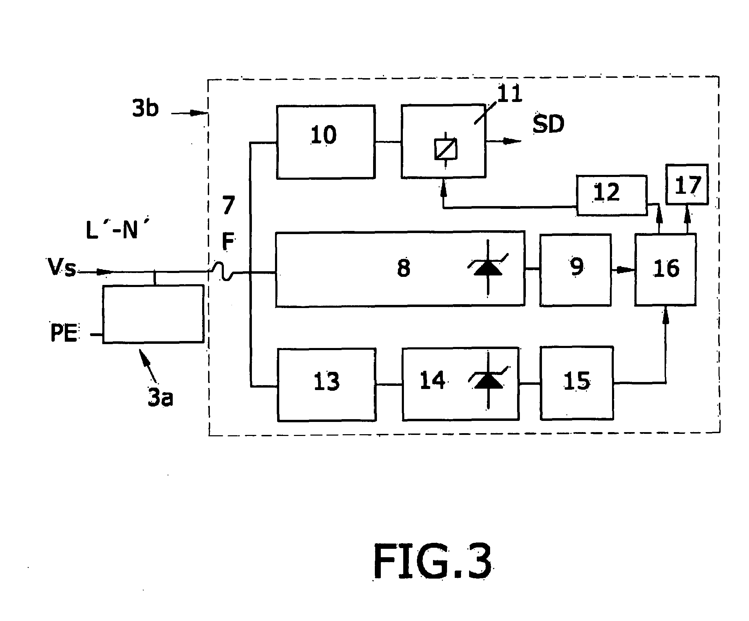

Figure 3 shows the parts, which make up the part protecting against temporary or permanent overvoltages (3b). This part (3b) is provided with a protective fuse (7) which in the event of breakdown separates the device protecting against temporary or permanent overvoltages (3b) of the network, prevents damages and its breakage causes the luminous indicators (I2) and (I3) to turn off (figure 2), this last permitting the user to detect that part of the protection has been lost and to replace the device.

After the fuse (7) we see that it is provided with a stabilised power supply (8) which in addition protects against ultra fast transient overvoltages, at the output of which a high frequency low pass filter (9) is installed, said output serving to supply the controller (16).

It is also provided with a second power supply (10) which obtains a continuous stabilised voltage for the actuator (11) supply. A separate supply from the previous one is used as it needs to have a greater voltage and current for the supply to the actuator.

A driver (12) is provided which is connected between the controller (16) and the actuator (11) which adapts the controller (16) output signal to the needs of the actuator voltage and current.

It is also provided with a voltage attenuator (13) which obtains one proportional to the network, adapted to the admissible voltage levels of the controller (16). The output of the voltage attenuator (13) is connected to a protection against ultra fast - transient overvoltages (14) which in turn is connected to a high frequency low pass filter (15).

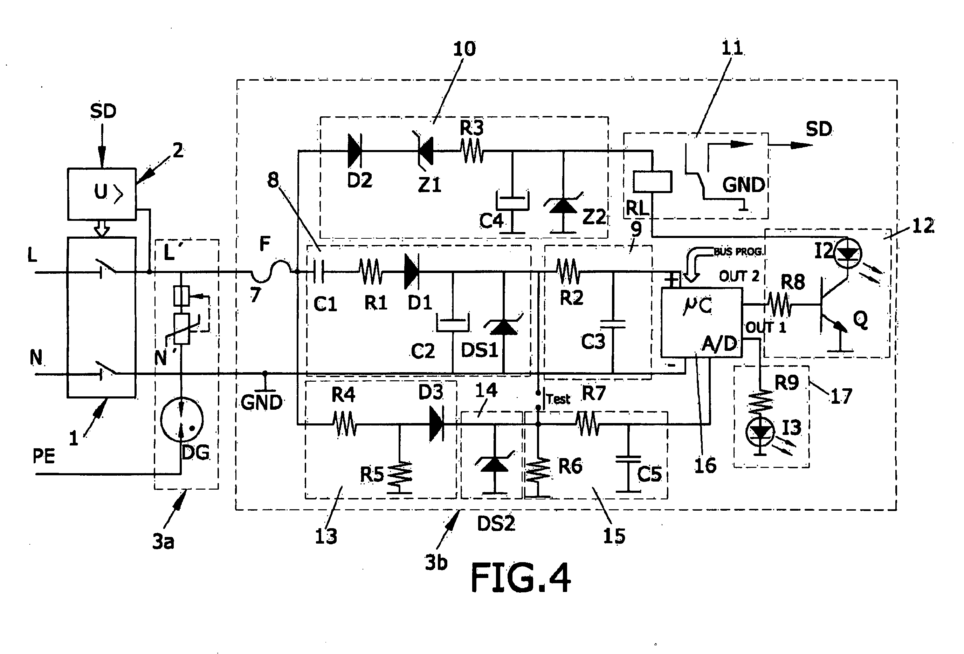

Figure 4 details the components described above depicting them as blocks in figure 3. Where the first power supply (8) comprises:

C1, R1: Current limiting impedance, the R1 resistance is of a low ohmic value in order to avoid high power dissipation.
D1: Rectifier diode, which rectifies the network voltage in half wave.
C2: Filter capacitor for reducing ripple in the continuous supply voltage of the controller.
DS1: Suppressor diode which has a dual purpose, in addition to limiting the value of possible ultra fast- transient overvoltage also acts as a voltage stabiliser.

The filter (9) which is connected to the output of the first power supply (8) comprises:

R2, C3: which is a high frequency low pass filter. The R2 resistance may be alternatively substituted by a small inductance (of the order of $\mu$H) in the event of requiring a filter with more attenuation to the high frequency.

The second power supply (10) comprises:

D2: Rectifies the network voltage in half wave.
Z1: Zener diode for reducing the peak value of the rectifier signal.
R3 Limits the current, which circulates through the Z2 diode.
C4: Filter capacitor, which permits a continuous voltage with a reduced ripple.
Z2: Zener diode which limits and stabilises the actuator supply voltage.

The voltage attenuator (13) comprises:

R4, R5 y D3: The resistances reduce the value of the output voltage of the circuit-breaker to the adequate levels at the controller input. The D3 diode eliminates the negative part of the alternating signal.

Furthermore, the part which protects against ultra fast - transient overvoltages (14) consists of DS2 which is a suppression diode for ultra fast - transient overvoltages, which limits the value of possible ultra fast - transient overvoltages.

Finally, the high frequency low pass filter (15) comprises R6, R7 and C5 and is used for the same reasons as in the power supply 1. The R7 resistance may be alternatively substituted by a small inductance (of the order of $\mu$H) in the event of requiring a filter with more attenuation to the high frequency.

The driver (12) and the activation indicator consist of a Q transistor which works in the cut off and saturation zones, when the output OUT2 of the controller adopts a high level it carries the transistor to the saturation zone permitting the current to circulate through the luminous indicator (I2) and through the RL actuator (11) (preferably an electromechanical relay), which produces a trip signal which obtains actuation of the electromechanical release.

The driver (12) is also provided with an R8 resistance sized so that with a high level in the output OUT 2 of the controller (16) there is a sufficient base current in the Q transistor to carry it to its saturation zone.

The functioning indicator (17) comprises: R9, I3. The OUT 1 controller output adopts high output levels when the device receives voltage in its input and processes the signal adequately. The R9 resistance is used to limit the current supplied to luminous indicator I3.

An intermittent luminous indicator was chosen for various reasons:

- Reducing consumption of the device.
- Detecting a malfunction of the device, if it is noted that there is voltage at the input to the combined device (L'-N') but the I3 indicator is permanently off or permanently on this would be an indication that there was a fault.

In respect of the actuator (11) it should be indicated that for preference an electromechanical relay should be used (RL). Through normally open contact (inactive status) supply voltage is applied to the shunt release in order to obtain actuation of the switching device.

As alternatives to the relay solid state devices may be used such as triacs and thyristors, adapting the driver to obtain adequate signals.

With respect to the controller (16) it should be mentioned that it is provided with an input with an analog/digital converter as with this type of input it is possible to obtain complete information on the most important input voltage parameters: rms value (Vrms) and peak value (Vpk) The controller is also suitable for in circuit programming, which permits software programming when it has been assembled and even modification of that software if necessary.

With regard to the trip signal applied to the electromechanical release associated with the switching device, preferably a circuit-breaker, it should be mentioned that when a temporary or permanent overvoltage has occurred with voltage levels and times which are sufficiently high to ensure that the controller output passes to its high level and activates the relay, the contacts are closed, applying the alternating voltage supply to the shunt release.

The shunt release generally used act within 10 ms and therefore by simply applying a full half period of the network signal it should be sufficient to trip it. Nevertheless, considering the relay switch times, it has been established that the controller will apply impulses with duration of between 2 and 3 network half periods (20-30 ms to 50 Hz). In addition, in order to ensure the release trip, the controller also gives various output impulses, with 2 or 3 being sufficient, the amplitude of the voltage applied to the shunt release will be that of the network during the activation time of the relay.

A trip with various short impulses was preferred to a continuous trip, in order to avoid in the event of release failure and non actuation of the switching device that a high voltage were to be permanently applied to a faulty device which could damage the installation.

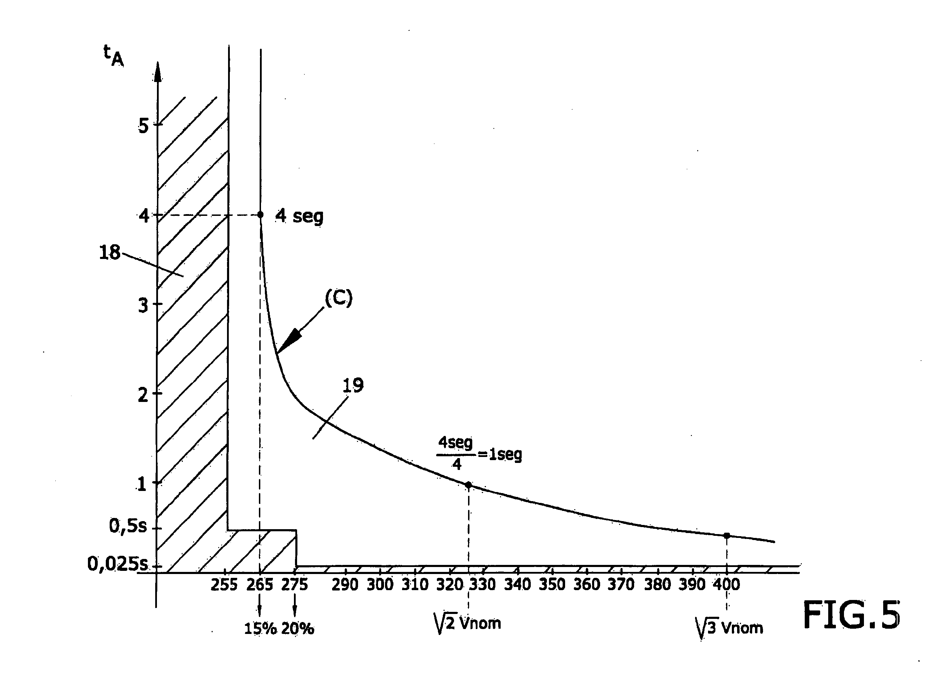

Figure 5 shows a graph which establishes the voltage - actuation time ratio where it is possible to distinguish a zone (18) of non actuation of the switching device as opposed to another zone (19) of switching device actuation, and finally a curve (c) which establishes maximum limit of actuation time $t_A$. The curve values (c ) shall vary according to the state of the art.

The first limit value is considered to be the maximum voltage between L-N in a 230/400 V (nominal value) three-phase configuration: (400 V + 10 % ) / $\sqrt{3}$ = 254 Voltage values which are equal to or less than this should not cause the switching device to actuate, with this limit being within the Zone (18) of the graph. Current international standards consider this maximum tolerance value to be adequate and therefore it is considered that all the connected loads should withstand this without problems for an indefinite period.

For values between 10-15 % of the nominal voltage (255-265 V) the device could act or not, in the event that it did so it should be with a minimum delay time of 0.5 seconds to avoid tripping. It is considered that within this voltage margin damage to customary loads should not occur either. This margin permits a small tolerance in the actuation voltage, which on one hand does not damage the loads and on the other facilitates the fact that precision components or adjustments which would increase the price of the device are not required.

For values between 15-20 % of the nominal voltage (265-275 V) the device has to act, in the event that it did so it should be with a minimum delay time of 0.5 seconds to avoid tripping, with the maximum value being that indicated in the c curve.

The minimum delay time of 0.5 seconds for overvoltages between 10-20% of the nominal voltage (255-275 V) indicated in the previous graph was deduced from current information on equipment used in Information Technology. With these values it is considered that a high degree of immunity from tripping is obtained without, however, being in any way detrimental to the safety of the loads.

For temporary and permanent overvoltages of more than 20% of the nominal voltage, 25ms was considered as a minimum value of delay time in the actuation. Overvoltages with lower times than this are not unusual in the electrical network, they are usually caused by the actuation of protective devices such as fuses, circuit-breakers, connections or disconnections of loads, manoeuvres etc; for overvoltage values considered in this case the loads are not usually damaged, in the event that they were greater they would be limited or amortised by the - protection against transient overvoltages. It should be pointed out that if there is not a minimum delay time in the actuation in the order of milliseconds the trip disconnections would be very frequent which would cause losses in service for users. Nevertheless, if for specific applications more reduced actuation times were required, it is perfectly feasible to achieve these with the combined device given the present state of the art of electronic and electromechanical devices.

With respect to maximum limits for actuation times represented by the (c )curve it should be mentioned that literature and experience to date has considered a time of 4 sec to be adequate as a maximum delay value in the actuation for an overvoltage of 15% (265 V).

In order to arrive at the times indicated the power dissipated by a resistive load was used, based on the voltage:

$$\text{Nominal power} = \text{Pnominal} = \text{Vnom}^2/R$$

Power with maximum overvoltage (phase-phase voltage):

$$(\text{Vnom} \times \sqrt{3})^2/R = 3 \times \text{Vnom}^2/R = 3 \times \text{Pnominal}$$

With this value it could be applied that the energy dissipated by the load were the same as in the case of the 15% overvoltage, and with this criterion a maximum actuation time of 4 sec/3 = 1.33 sec could be permitted.

Nevertheless, it has been considered that the criterion indicated above is not very demanding as there are devices which are more sensitive to voltage and therefore a square criterion has been applied, that is:

For the phase-phase voltage, instead of a time of 4 sec/3 = 1.33 sec the following will be used:

$$4 \text{ sec} / 3^2 = 4/9 = 0.44 \text{ sec}$$

For example, considering an overvoltage with a value Vnom x √2, instead of 4 sec/2 = 2 sec, the following will be used:

$$4 \text{ sec} / 22 = 4/4 = 1 \text{ sec}$$

The same criterion is used for the remaining intermediate values.

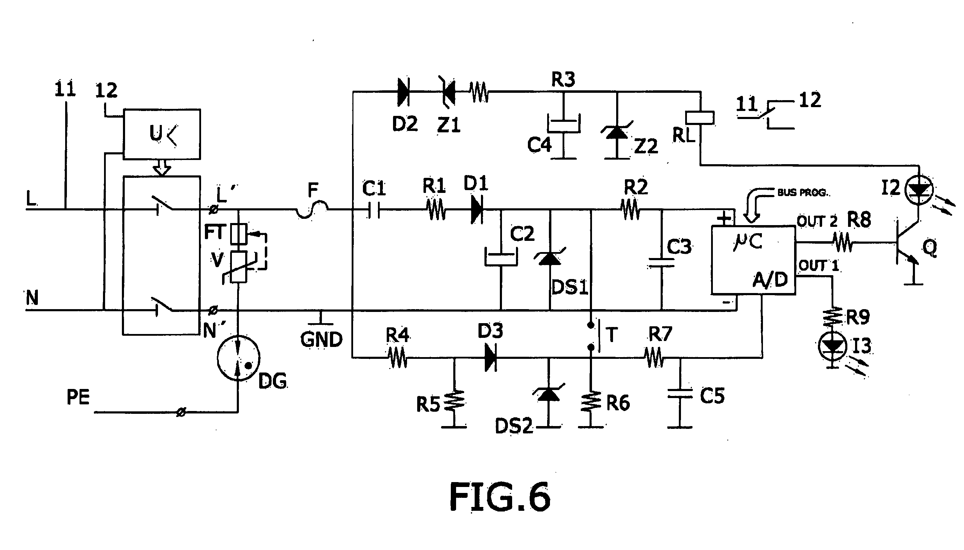

Figure 6 shows a diagram of the device in the event of actuation on an under-voltage release type. In this case an electromechanical relay $R_L$ is used as actuator, and through its normally closed contact in order to adapt the functioning to an under-voltage release.

The under-voltage release causes the actuation of the switching device when its supply voltage is lower than a specific limit, customarily between 50 to 70 % of its nominal voltage.

The functioning of the combined device when there is a correct input voltage is such that the $R_L$ relay is not activated, the normally closed contact (terminals 11-12) remains in its resting position and the under-voltage release receives voltage, permitting the cut off device to be connecting and thus supply voltage reaches the installation and loads downstream. When the input voltage exceeds the predetermined levels and times the relay acts opening the contact, this leaves the under-voltage release without voltage and causes opening of the switching device leaving the combined device and the installation without supply in order to protect it.

The use of the under-voltage release introduces an added performance when the input voltage varies as the switching device will act not only through- overvoltage but also by under-voltage, this situation may represent both an advantage and a disadvantage depending on the planned use of the protection device. It may be an advantage as it adds a protection to loads which are sensitive to under-voltage, for example motors, refrigerators or air conditioning equipment, in contrast it may cause the cut off in the supply voltage due to micro cuts, prolonged gaps and drops in voltage.

Figure 7 of the combined device which is the object of the invention for three-phase networks with configuration of the TT electrical network.

A possible configuration may be that formed by the DG gas arrester (it limits - transient overvoltages between neutral and earth) the varistors V1,V2 and V3 (they limit transient overvoltages between lines and neutral) and the thermal fuses FT1, FT2 and FT3 which acts when each varistor reaches the end of its lifetime.

With respect to protection against temporary and permanent overvoltages, the functioning would be similar to the single phase case, in which a protection fuse by phase was used (F1, F2 and F3) and three-phase rectification of the input voltage, and as preferred actuator an RL electromechanical relay is maintained.

As with the single phase device, it is determined whether one or several of the rms or peak values of the voltages fo each phase exceed the predetermined levels and times, in which case the shunt release trips using the open contact of the $R_L$. relay.

When the RL acts the contact closes, the shunt release receives the L1'-N' voltage and opens the switching device, and consequently also all the devices and loads connected downstream of it (including the combined device they remain without supply and protected).

Nevertheless, it is necessary to mention a possible although unlikely problem when using only voltage of one phase to trip the shunt release, in the event that the voltage of that phase (L1'-N') were less than that of activation of the shunt release the device would not act correctly as even if there were overvoltage in L2' or in L3', this situation could occur, for example, in the event of accidental breakage or a faulty connection of the L1 phase.

In order to resolve the problem above, a system is used which is able to apply an adequate trip voltage to the shunt release in any condition, even in the event that the voltage of 2 of the 3 phases is completely lost:

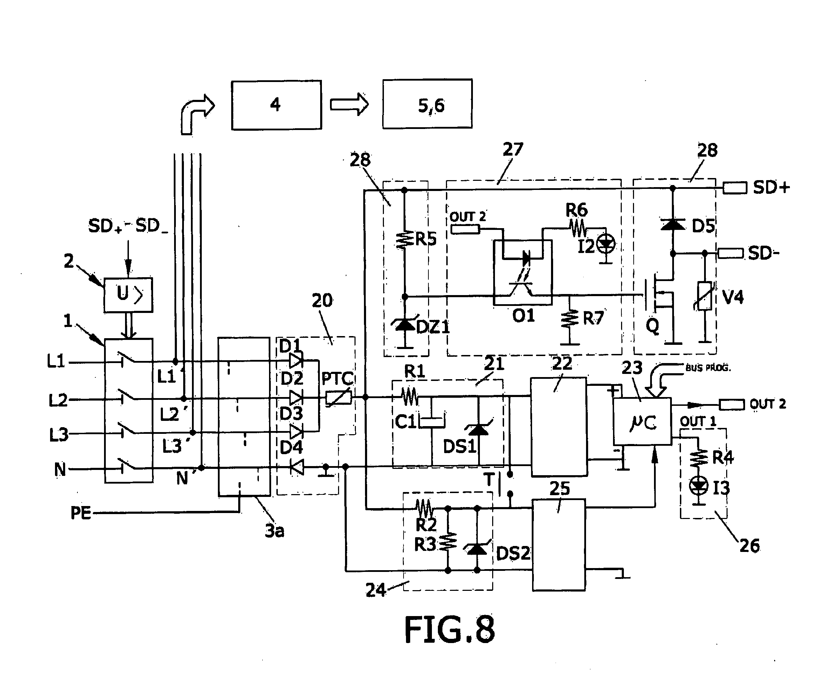

> Figure 8 shows a diagram of a combined protection device for three-phase networks in a possible embodiment of the invention, where some elements necessary for the construction of the device are very similar to those employed for the single phase device.

**The combined protection device for three-phase networks comprises :**

- **an input rectification and protection stage (20) consisting of:**

> D1, D2, D3: They act as three-phase rectifier of the network voltage.
> D4: It protects current impulses from neutral.
> PTC: It is used as an input protection device instead of a fuse, as it prevents current peaks circulating through the shunt release from damaging it despite correct functioning.

- **a first power supply (21) of the controller (23) consisting of:**

> R1: Current limiting resistor
> C1: High capacity filter capacitor, for reducing ripple in the continuous voltage of the controller supply.
> DS1: Suppression diode which acts as a voltage stabiliser, in a manner similar to that of a zener diode, and which also limits the value of possible ultra - fast transient overvoltages which have not been eliminated in previous stages.
> A high frequency low pass filter (22) which is associated with this power supply (21) is provided at its output with characteristics similar to those described in the single phase circuit.

- **a voltage attenuator (24) consisting of:**

> R2, R3: The resistors reduce the value of the output voltage of the circuit-breaker to the adequate levels of the controller input.
> DS2: Suppression diode of ultra - fast transient overvoltages, which limits the value of any possible ultra - fast transient overvoltages.
> A high frequency low pass filter (25) which is associated with this power supply (21) is provided at its output with characteristics similar to those described in the single phase circuit.

- **a controller (23)**
As with the single phase device a controller is used with an input with an analog/digital converter, so that complete information may be obtained of the most important parameters of the input voltage: rms value (Vrms) and peak value (Vpk) The device is also appropriate for carrying out the in circuit programming. when the input voltage has exceeded predetermined voltage levels and times the controller generates an appropriate signal in its OUT 2 output so that the shunt release will trip.

- **a functioning indicator (26) which consists of:**

> R4, I3: The OUT 1 output of the controller adopts high output levels when the device receives voltage at its input and processes the signal adequately. The R4 resistance is used to limit the current supplied to the luminous indicator. An intermittent luminous indicator was chosen for the same reasons as in the case of the single phase.

- **an actuator (28) consisting of:**

> Q Transistor: Of the MOSFET type, controlled by its gate voltage. This type of transistor was used as it offers an extremely high actuation speed which is required in the system used.

The transistor enters conduction when the OUT 2 output of the controller acquires high levels, conversely when OUT 2 is at a low level the transistor is in cut off and does not permit current to pass through the shunt release. The transistor conduction enables current to circulate through the shunt release, acting on the switching device, causing its opening and leaving all the devices and loads connected downstream without supply.

R7: It is used to avoid oscillations when the photo transistor of the O1 optocoupler is cut off, thus avoiding tripping.

V4, D5: The transistor acts on an inductive load and therefore when the current flow is interrupted, overvoltages are created, and in order to prevent them from affecting the transistor these are restricted by means of the V4 varistor and the D5 diode.

**- a driver (27) and activation indication (12):**

When a temporary or permanent overvoltage is detected which exceeds predetermined values and times, the OUT 2 output voltage of the controller adopts high levels circulating current through the O1 photo diode, R6 and activation indicator 12. As a result the O1 photo transistor saturates and a voltage is applied which is approximately equal to the voltage of the DZ1 zener diode to the Q transistor gate thus ensuring its conduct and release actuation.

The zener voltage is obtained on the basis of the rectified $SD_+$ three-phase voltage, using R5 and DZ1, and therefore even in the event that two of the three phases are lost, voltage is available to act on the Q transistor and on the shunt release.

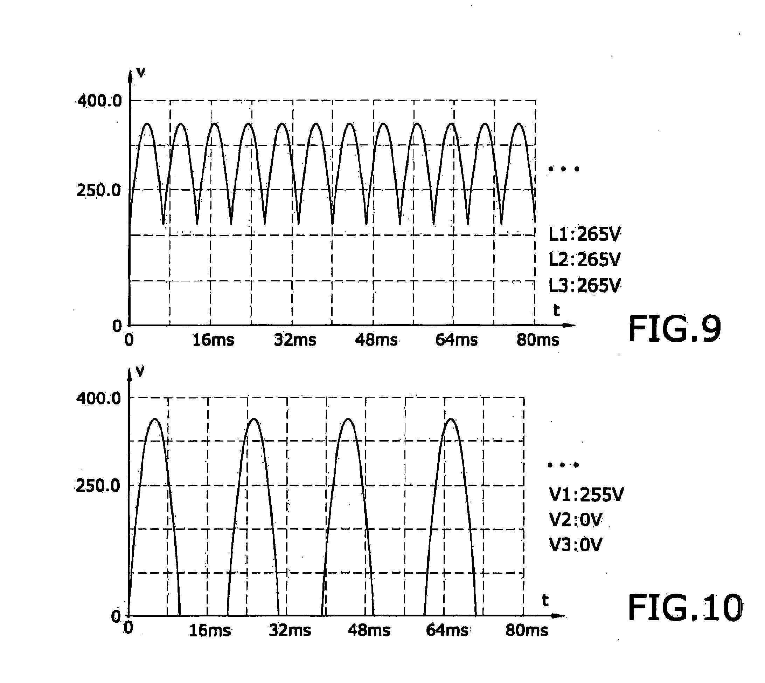

Figures 9 and 10 show the form of SD+ voltage in two of the possible extreme cases, this voltage will be used to obtain the trip signal. Figure 9 shows the case in which the three phases are at 265 V whereas figure 10 shows a case where only one phase is at 255 V.

**Trip signal**

In accordance with the diagram indicated in figure 8, when the Q transistor conducts a voltage ($SD_+$ - $SD_-$) is applied in the release terminals, which is approximately equal to the $SD_+$ voltage. The SD+ voltage is obtained at the output of the three-phase rectifier and therefore it has a high continuous component and a considerable level variation, this situation is reflected in figures 9 and 10 where some limit cases are indicated:

It is therefore preferable to use shunt release for functioning with continuous voltage, however, these have the disadvantage that their electrical characteristics largely depend on the manufacturers, and in order to resolve this disadvantage a trip signal with dephased bursts is used with a variable duty cycle in high frequency. The aim is to achieve a sequence of "n" impulses with an average value of growing voltage of one impulse to the next, so that in this way when the release trip voltage is reached this will act, causing the circuit-breaker to open and to cut off the supply voltage:

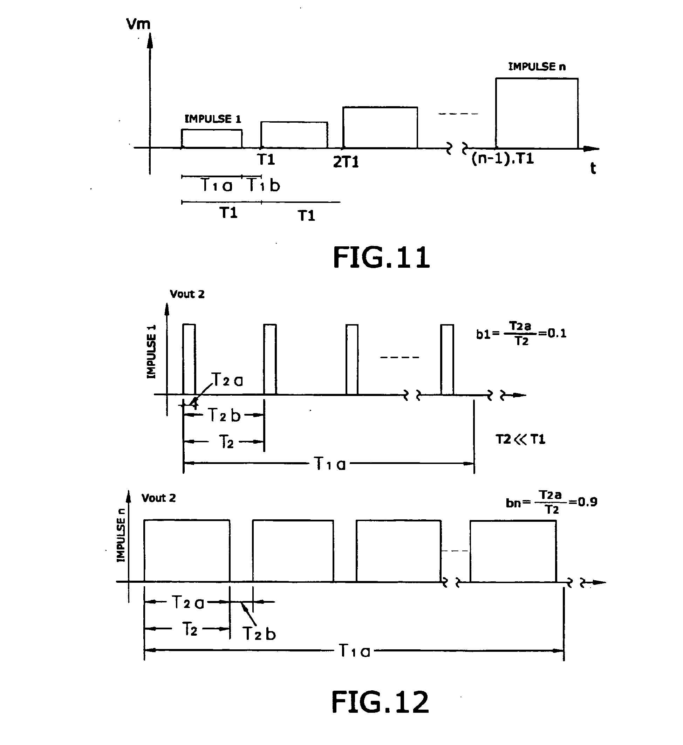

Figure 11 shows a trip burst resulting from a sequence of impulses, in order to determine the duration of the impulses (T1) the typical release actuation times were taken into account, and therefore T1 duration impulses were considered adequate: 15 ... 25 ms. In order to consider the most unfavourable $SD_+$ voltage case (only voltage in 1 phase) the impulses are dephased between each other a fixed time T1b, with a value lower than a half period (typical T1b: 3 ... 5 ms), in this way in some of the "n" impulses applied the voltage required to cause the trip will be achieved.

In order to increase the average value of the voltage of each impulse (Vm) the Q transistor is switched to a much higher frequency than that of the network, however with a growing conduction time, that is, when the duty cycle ($\delta$) of one impulse to the next is increased, thus figure 12 shows two extreme situations of impulse sequences in which the upper graph is for a duty cycle of 10%, whereas the lower part is for a final duty cycle of 90%.

The $V_{OUT2}$ signals indicated in figure 12 also show the conduction situation of the Q transistor (figure 8):

$V_{OUT2}$: High level → Q conducts → Voltage is applied to the release
$V_{OUT2}$: Low level → Q does not conduct → Voltage is not applied to the release

When using an impulse frequency, within each impulse, much higher than the network frequency (T2 << 20 ms (1/50 Hz)) the release reacts to the average voltage value of the applied impulses, which depend on the conduction duty cycle of the transistor.

The first impulse of the burst is preferably initiated with a reduced duty cycle of around (10%) and increases with every impulse until it reaches a maximum of around 90% , the number of impulses is generally restricted to a value between 10 and 15 in order to prevent voltage being permanently applied in the event of malfunctioning of the release.

The device is also applicable in installations where protection against - transient overvoltages is not considered necessary. This situation is usually considered in applications where the electrical network is subterranean or above ground, however, in the geographical area considered there are few storms. It would therefore be a protection device only against temporary and permanent overvoltages.

With these considerations therefore, the cost of the device could be reduced by not using components designed to protect - transient overvoltages (in the electronic diagrams indicated above these would be the DG gas arresters and the V varistors). The essential nature of this invention is not altered by any variations in materials, form, size and arrangement of its component elements, which are described in a non-restrictive manner, with this being sufficient to proceed to its reproduction by an expert.

**Claims**

1. Protection system comprising a combined device (3) for low voltage electrical protection against transient overvoltages (3a) and against temporary and permanent overvoltages (3b) which work in association with electromechanical releases (2) which cause a switching device (1) to open when there is supply overvoltage above a specific time leaving the loads (5,6) downstream of the device without supply; the device is provided with a part which protects against - transient overvoltages (3a) and another part which protects against temporary and permanent overvoltages (3b), wherein the combined protection device

   - it is arranged downstream of the switching device (1) on which it acts and therefore it is only required to withstand any transient, temporary or permanent overvoltages which may exist during the time which pass from the start of the overvoltage to the opening of the switching element and is separated from the network following its actuation and opening of the switching device (1),
   - It permits an actuation time from the start of the overvoltage to the opening of the switching element which may vary according to the level of overvoltage, and is programmable to avoid trip actions which would unnecessarily leave the user without service.

   Being **characterized in that**

   - it permits both the peak value and the rms value of the network signal to be processed in order to produce the trip and actuation of the switching device (1).
   - The electromechanical release receive a trip signal consistent with a sequence of impulses having an average value form one impulse to the next having a growing conduction time.

2. - Protection system according to claim 1 **characterised in that** the part of the device which protects against temporary and permanent overvoltages for a single phase network is provided with

   - a fuse (7)
   - A first power supply (8) for obtaining continuous stabilised voltage for supply to a controller (16).
   - a high frequency low pass filter (9) arranged at the output of the first power supply (8).
   - A second power supply (10) for obtaining continuous stabilised voltage for supply to a actuator (11).
   - A driver (12) which adapts the output signal of the controller (16) to the voltage and current needs of the actuator (11).
   - A voltage attenuator (13) which at its output obtains a signal proportional to the network voltage, adapted to admissible voltage levels by the controller (16).
   - A protection against ultra fast transient overvoltages (14) and a high frequency low pass filter (15).
   - A luminous indicator (12) which is activated when overvoltage exists.
   - A : luminous indicator (13) which indicates the presence of voltage at the combined device input and the correct functioning of the controller.

3. - Protection system according to claim 2 **characterised in that**:

   - The first power supply (8) consists of:

      C1, R1: Current limiting impedance
      D1: Rectifying diode
      C2: Filter capacitor
      DS1: Suppressor diode which has a dual function in addition to limiting the value of possible ultra - fast transient overvoltages, it also acts as a voltage stabiliser in a similar manner to a zener diode.

- The filter (9) which is connected to the output of the first power supply (8) comprises:

    R2, C3: which is a high frequency low pass filter.

- the second power supply (10) consists of:

    D2: Rectifies the network voltage in half wave
    Z1: Zener diode for reducing the value of the peak signal of the rectifier.
    R3: Limits the current circulating through the Z2 diode.
    C4: Filter capacitor which permits a continuous voltage with a reduced ripple.
    Z2: Zener diode which limits and stabilises the supply voltage of the actuator.

- The voltage attenuator (13) consisting of:

    R4, R5 and D3: The resistors reduce the value of the output voltage of the circuit-breaker to the adequate levels of the controller input. The D3 diode eliminates the negative part of the alternating signal.

- The part protecting against ultra fast transient overvoltages (14) comprises DS2 which is a suppressor diode for ultra fast transient overvoltages.
- The high frequency low pass filter (15) consists of R6, R7 and C5 and is used for the same reasons as in the case of power supply 1.

4. Protection system according to claim 2 **characterised in that** the driver (12) and the indication of activation consists of a Q transistor, when the OUT 2 output of the controller adopts a high level it permits circulation of the current by the luminous indicator (12) and by the RL actuator (11), which produces a trip signal which actuates the electromechanical release, the driver (12) is also provided with an R8 resistor sized so that with a high level in the OUT 2 output of the controller (16) a base current is provided in the Q transistor which is sufficient to conduct.

5. - Protection system according to claim 2 **characterised in that** the functioning indication (17) consists of : R9, I3:

6. - Protection system according to claim 4 **characterised in that** the actuator (11) is an electromechanical relay.

7. - Protection system according to claim 4 **characterised in that** the actuators (11) are solid state devices such as triacs and thyristors.

8. - Protection system according to claim 1 **characterised in that** for three-phase networks the combined protection device for three-phase networks consists of one part which protects against - transient overvoltages and another part which protects against temporary and permanent overvoltages comprising

    - an input rectification and protection stage (20),
    - a first power supply (21) of the controller (23),
    - a high frequency low pass filter (22) associated with said power supply (21)
    - a voltage attenuator (24)
    - a high frequency low pass filter (25) associated with said attenuator at its output.
    - a controller (23)
    - a function indicator (26),
    - an actuator (28)
    - a driver (27) and activation indication (12)

9. - Protection system according to claim 8 **characterised in that** the rectification and input protection stage (20) consists of :

    D1, D2, D3: They act as three-phase rectifier of the network voltage.
    D4: It protects current impulses from neutral.
    PTC: It is used as an input protection device instead of a fuse, as it prevents current peaks circulating through the shunt release from damaging it despite correct functioning.

10. Protection system according to claims 1 to 8 **characterised in that** the controller is provided with an input with an analog/digital converter so that it may obtain complete information of the most important input voltage parameters in order to produce the trip: Duration of the overvoltage, rms value (Vrms) and peak value (Vpk), once the input voltage has exceeded predetermined voltage and time levels, the controller generates at its OUT 2 output an adequate signal in order to trip the electromechanical release, and the devices is equally suitable to carry out the in circuit programming.

**11.** - Protection system according to claim 8 **characterised in that** the actuator (28) consists of a Q transistor of the MOSFET type, controlled by its gate voltage and in addition it is provided with:

R7: It is used to avoid oscillations when the photo transistor of the O1 optocoupler is cut off, thus avoiding unwanted tripping.
V4, D5: The transistor acts on an inductive load and therefore when the current flow is interrupted, overvoltages are created, and in order to prevent them from affecting the transistor these are restricted by means of a V4 varistor and a D5 diode.

**12.** Protection system according to claim 8 **characterised in that** the driver (27) consists of an O1 photo diode , an R6 resistor and an activation indicator I2 so that when a temporary or permanent overvoltage is detected which exceeds predetermined values and times, the OUT 2 output voltage of the controller adopts high levels, circulating current through the O1 photo diode, R6 and the activation indicator I2, which causes saturation of the O1 phototransistor and a voltage is applied which is approximately equal to the DZ1 zener diode voltage to the gate of transistor Q, thus achieving its conduction and actuation of the release, where the zener voltage is obtained on the basis of the $SD_+$ rectified three-phase voltage, by means of R5 and DZ1, therefore even in the event that two of the three phases are lost voltage is provided to act on the Q transistor and on the shunt release.

**13.** - Protection system according to claim 12, **characterised in that** the impulse sequence received by the electromechanical releases present a reduced duty cycle of around (10%) and increases in each impulse until it reaches a maximum of around (90%).

**14.** - Protection system according to claim 1 **characterised in that** the variable and programmable actuation time which prevents unwanted tripping consists of a zone (18) of non actuation of the switching device, as opposed to another zone (19) of activation of the switching device, where the times of the non actuation zone are lower than a curve which establishes the maximum limit of actuation time $t_A$ and which varies according to the state of the art.

**15.** - Protection system according to claim 10 **characterised in that** the electromechanical release associated with the switching device is a shunt release.

**16.** - Protection system according to claim 10 **characterised in that** the electromechanical release associated with the switching device is a under-voltage release acting not only in the case of overvoltage but also in under-voltage.

**17.** - Protection system according to claim 8 **characterised in that** the shunt release of the electromechanical switch trips even in the event that voltage of one or two phases is lost and therefore the trip signal is generated from the three phase signal.

**Patentansprüche**

**1.** Schutzsystem, das eine kombinierte Vorrichtung (3) zum elektrischen Schutz bei Niederspannung gegen kurzfristige Überspannungen (3a) und gegen zeitweilige und dauerhafte Überspannungen (3b) umfasst, das mit elektromechanischen Entriegelungen (2) zusammenarbeitet, die bewirken, dass sich eine Schaltvorrichtung (1) öffnet, wenn es über eine spezifische Zeit hinaus zu einer Überspannung der Versorgung kommt, was die nachgeschalteten Stromverbraucher (5, 6) der Vorrichtung unversorgt lässt; die Vorrichtung ist mit einem Teil versehen, der gegen kurzfristige Überspannungen (3a) schützt, und einem anderen Teil, der gegen zeitweilige und dauerhafte Überspannungen (3b) schützt, wobei die kombinierte Schutzvorrichtung

- der Schaltvorrichtung (1), auf die sie wirkt, nachgeschaltet angeordnet ist, und daher ist es nur erforderlich, dass sie jeglichen kurzfristigen, zeitweiligen oder dauerhaften Überspannungen standhält, die während der Zeit auftreten können, die ab dem Beginn der Überspannung bis zur Öffnung des Schaltelements vergeht, und anschließend an ihre Betätigung und Öffnung der Schaltvorrichtung (1) vom Netz getrennt wird,

- Eine Betätigungszeit ab dem Beginn der Überspannung bis zur Öffnung des Schaltelements zulässt, die entsprechend dem Niveau der Überspannung variieren kann, und die programmierbar ist, um Auslösewirkungen zu vermeiden, die unnötigerweise dem Nutzer den Betrieb verwehren würden.

**Dadurch gekennzeichnet, dass**

- es sowohl den Spitzenwert als auch den rms-Wert des zu verarbeitenden Netzsignals zulässt, um das Auslösen und die Betätigung der Schaltvorrichtung (1) zu erzeugen.
- Die elektromagnetische Entriegelung ein Auslösesignal erhält, beständig mit einer Sequenz von Impulsen, die einen Mittelwert von einem Impuls zum anderen haben, der eine steigende Leitzeit hat.

2. Schutzsystem nach Anspruch 1, **dadurch gekennzeichnet, dass** für ein einphasiges Netz der Teil der Vorrichtung, der gegen zeitweilige und dauerhafte Überspannungen schützt, versehen ist mit

- einer Sicherung (7)
- Einer ersten Energieversorgung (8), um eine kontinuierliche stabilisierte Spannung zur Versorgung einer Steuerung (16) zu erhalten.
- einem Hochfrequenz-Tiefpassfilter (9), angeordnet am Ausgang der ersten Energieversorgung (8).
- Einer zweiten Energieversorgung (10), um eine kontinuierliche stabilisierte Spannung zur Versorgung eines Betätigungselements (11) zu erhalten.
- Einem Antrieb (12), der das Ausgangssignal der Steuerung (16) an die Anforderungen an Spannung und Strom des Betätigungselements (11) anpasst.
- Einem Spannungsabschwächer (13), der an seinem Ausgang ein zur Netzspannung proportionales Signal erhält, das durch die Steuerung (16) an zulässige Spannungsniveaus angepasst ist.
- Einem Schutz gegen äußerst schnelle kurzfristige Überspannungen (14) und einem Hochfrequenz-Tiefpassfilter (15).
- Einer Leuchtanzeige (12), die aktiviert wird, wenn eine Überspannung auftritt.
- Einer: Leuchtanzeige (13), welche das Vorhandensein von Spannung am Eingang der kombinierten Vorrichtung und das korrekte Funktionieren der Steuerung anzeigt.

3. Schutzsystem nach Anspruch 2, **dadurch gekennzeichnet, dass:**

- Die erste Energieversorgung (8) besteht aus:

C1, R1: Spannungsbegrenzender Impedanz
D1: Gleichrichterdiode
C2: Filterkondensator
DS1: Suppressordiode, welche zusätzlich zur Begrenzung des Wertes der möglichen äußerst schnellen kurzfristigen Überspannungen eine Doppelfunktion hat, sie wirkt auch als Spannungsstabilisierung auf eine ähnliche Weise wie eine Zenerdiode.

- Der Filter (9), welcher an den Ausgang der ersten Energieversorgung (8) angeschlossen ist umfasst:

R2, C3: welcher ein Hochfrequenz-Tiefpassfilter ist.

- die zweite Energieversorgung (10) besteht aus:

D2: Richtet die Netzspannung in einer Halbwelle gleich
Z1: Zenerdiode, zur Reduzierung des Wertes des Spitzensignals des Gleichrichters.
R3: Begrenzt den Strom, der durch die Z2-Diode zirkuliert.
C4: Filterkondensator, der eine kontinuierliche Spannung mit reduzierter Welligkeit zulässt.
Z2: Zenerdiode, welche die Versorgungsspannung des Betätigungselements begrenzt und stabilisiert.

- Der Spannungsabschwächer (13) besteht aus:

R4, R5 y D3: Die Widerstände reduzieren den Wert der Ausgangsspannung des Leitungsschutzschalters auf die geeigneten Niveaus des Steuerungseingangs. Die D3-Diode beseitigt den negativen Teil des wechselnden Signals.

- Der Teil, der gegen äußerst schnelle kurzfristige Überspannungen (14) schützt, DS2 umfasst, welche eine Suppressordiode für äußerst schnelle kurzfristige Überspannungen ist.
- Der Hochfrequenz-Tiefpassfilter (15) aus R6, R7 und C5 besteht und aus denselben Gründen wie in dem Fall der Energieversorgung 1 genutzt wird.

4. Schutzsystem nach Anspruch 2, **dadurch gekennzeichnet, dass** der Antrieb (12) und die Anzeige der Aktivierung aus einem Q-Transistor besteht, wenn der OUT 2-Ausgang der Steuerung ein hohes Niveau einnimmt, lässt er die Zirkulation des Stroms durch die Leuchtanzeige (12) und durch das RL-Betätigungselement (11) zu, was ein Auslösesignal produziert, welches die elektromechanische Entriegelung betätigt, der Antrieb (12) ist auch mit einem R8-Widerstand versehen, der so bemessen ist, dass bei einem hohen Niveau in dem OUT 2-Ausgang der Steuerung (16) ein Basisstrom in dem Q-Transistor vorgesehen wird, welcher zum Leiten ausreichend ist.

5. Schutzsystem nach Anspruch 2, **dadurch gekennzeichnet, dass** die Anzeige des Funktionierens (17) besteht aus: R9, I3:

6. Schutzsystem nach Anspruch 4, **dadurch gekennzeichnet, dass** das Betätigungselement (11) ein elektromechanisches Relais ist.

7. Schutzsystem nach Anspruch 4, **dadurch gekennzeichnet, dass** die Betätigungselemente (11) Festkörpervorrichtungen sind, wie Triacs und Thyristoren.

8. Schutzsystem nach Anspruch 1, **dadurch gekennzeichnet, dass** für dreiphasige Netze die kombinierte Schutzvorrichtung für dreiphasige Netze aus einem Teil besteht, welcher gegen kurzfristige Überspannungen schützt, und einem anderen Teil, welcher gegen zeitweilige und dauerhafte Überspannungen schützt, das umfasst:

   - einen Gleichrichtungs- und Schutzschritt des Eingangs (20),
   - eine erste Energieversorgung (21) der Steuerung (23),
   - einen mit der besagten Energieversorgung (21) verbundenen Hochfrequenz-Tiefpassfilter (22)
   - einen Spannungsabschwächer (24)
   - einen mit dem besagten Abschwächer an seinem Ausgang verbundenen Hochfrequenz-Tiefpassfilter (25).
   - eine Steuerung (23)
   - eine Funktionsanzeige (26),
   - ein Betätigungselement (28)
   - einen Antrieb (27) und eine Aktivierungsanzeige (12)

9. Schutzsystem nach Anspruch 8, **dadurch gekennzeichnet, dass** der Gleichrichtungs- und Eingangsschutzschritt (20) besteht aus:

   D 1, D2, D3: Wirken als Dreiphasen-Gleichrichter der Netzspannung.
   D4: Schützt Stromimpulse vor Null.
   PTC: Wird benutzt als eine Eingangsschutzvorrichtung anstelle einer Sicherung, da sie verhindert, dass trotz des korrekten Funktionierens Stromspitzen, die durch die Shunt-Entriegelung zirkulieren, diese beschädigen.

10. Schutzsystem nach den Ansprüchen 1 bis 8, **dadurch gekennzeichnet, dass** die Steuerung mit einem Eingang mit einem Analog/Digital-Wandler versehen ist, so dass es die komplette Information der wichtigsten Spannungseingangsparameter erhalten kann, um das Auslösen zu erzeugen:

    Dauer der Überspannung, rms-Wert (Vrms) und Spitzenwert (Vpk), sobald die Eingangsspannung vorbestimmte Spannung- und Zeitniveaus überschritten hat, generiert die Steuerung an seinem OUT 2-Ausgang ein geeignetes Signal, um die elektromechanische Verriegelung auszulösen, und die Vorrichtung ist ebenso zweckmäßig, um die Programmierung innerhalb der Schaltung auszuführen.

11. Schutzsystem nach Anspruch 8, **dadurch gekennzeichnet, dass** das Betätigungselement (28) aus einem Q-Transistor des MOSFET-Typs besteht, gesteuert durch seine Gate-Spannung und zusätzlich ist es versehen mit:

    R7: Wird benutzt um Schwingungen zu verhindern wenn der Fototransistor des O1-Optokopplers abgetrennt wird, wodurch ein ungewünschtes Auslösen verhindert wird.
    V4, D5: Der Transistor wirkt auf eine induktive Last und daher werden Überspannungen geschaffen, wenn der Stromfluss unterbrochen wird, und um zu verhindern, dass sich diese auf den Transistor auswirken, werden sie mittels eines V4-Varistors und einer D5-Diode beschränkt.

**12.** Schutzsystem nach Anspruch 8, **dadurch gekennzeichnet, dass** der Antrieb (27) aus einer O1-Fotodiode, einem R6-Widerstand und einer Aktivierungsanzeige I2 besteht, so dass, wenn eine zeitweilige oder dauerhafte Überspannung erfasst wird, welche die vorbestimmten Werte und Zeiten überschreitet, die OUT 2-Ausgangsspannung der Steuerung hohe Niveaus annimmt, wobei sie Strom durch die O1-Fotodiode, R6 und die Aktivierungsanzeige I2 zirkulieren lässt, was eine Sättigung des O1-Fototransistors bewirkt, und es wird eine Spannung angelegt, welche nahezu gleich der Spannung der DZ1-Zenerdiode zum Gate des Transistors Q ist, wodurch sein Leiten und die Betätigung der Entriegelung erreicht wird, wodurch die Zenerspannung auf Basis der SD+-gerichteten dreiphasigen Spannung erhalten wird, mittels R5 und DZ1, daher ist es selbst in dem Falle, dass zwei der drei Phasen ausfallen, mit Spannung versehen, um auf den Q-Transistor und auf die Shunt-Entriegelung einzuwirken.

**13.** Schutzsystem nach Anspruch 12, **dadurch gekennzeichnet, dass** die durch die elektromechanischen Entriegelungen empfangene Impulssequenz einen reduzierten Tastgrad von ungefähr (10%) aufweist, und bei jedem Impuls steigt, bis sie ein Maximum von ungefähr (90%) erreicht.

**14.** Schutzsystem nach Anspruch 1, **dadurch gekennzeichnet, dass** die variable und programmierbare Betätigungszeit, welche ein ungewolltes Auslösen verhindert, aus einer Zone (18) der Nichtbetätigung der Schaltvorrichtung besteht, entgegen einer anderen Zone (19) der Aktivierung der Schaltvorrichtung, wobei die Zeiten der Nichtbetätigungszone niedriger sind, als eine Kurve, welche die maximale Grenze der Betätigungszeit $t_A$ festlegt und welche entsprechend dem Stand der Technik variiert.

**15.** Schutzsystem nach Anspruch 10, **dadurch gekennzeichnet, dass** die mit der Schaltvorrichtung verbundene elektromechanische Entriegelung eine Shunt-Entriegelung ist.

**16.** Schutzsystem nach Anspruch 10, **dadurch gekennzeichnet, dass** die mit der Schaltvorrichtung verbundene elektromechanische Entriegelung eine Unterspannungs-Entriegelung ist, die nicht nur in dem Falle von Überspannung wirkt, sondern auch bei Unterspannung.

**17.** Schutzsystem nach Anspruch 8, **dadurch gekennzeichnet, dass** die Shunt-Entriegelung des elektromechanischen Schalters selbst in dem Falle auslöst, dass Spannung von einer oder zwei Phasen ausfällt, und daher wird das Auslösesignal vom dreiphasigen Signal generiert.

**Revendications**

**1.** Système de protection comprenant un dispositif combiné (3) de protection électrique à basse tension contre surtensions transitoires (3a) et contre surtensions transitoires et étendues (3b) fonctionnant en collaboration avec déclencheurs électromécaniques (2) causant l'ouverture d'un dispositif de commutation (1) lorsqu'il existe une surtension d'alimentation au-dessus d'un temps spécifique qui laisse des charges (5, 6) en aval du dispositif sans alimentation; le dispositif est muni d'une partie protégeant contre - surtensions transitoires (3a) et d'une autre partie protégeant contre surtensions transitoires et étendues (2b), dans lequel le dispositif de protection combiné

- est disposé en aval du dispositif de commutation (1) sur lequel il agit et, donc, seulement est nécessaire qu'il résiste n'importe quelles surtensions transitoires ou étendues pouvant exister pendant le temps qui s'écoule depuis le début de la surtension jusqu'à l'ouverture de l'élément de commutation et il est séparé du réseau âpres son actionnement et l'ouverture du dispositif de commutation (1),
- permet un temps d'actionnement depuis le début de la surtension jusqu'à l'ouverture de l'élément de commutation qui peut charger selon le niveau de surtension, et il est programmable pour éviter actions de déclenchement qui pourraient laisser, de façon pas nécessaire, à l'utilisateur sans service.
Etant **caractérisé en ce que**
- il permet autant la valeur pic et la valeur rms du signal du réseau être traité de manière à produire le déclenchement et l'actionnement du dispositif de commutation (1).
- Le déclencheur électromécanique reçoit un signal de déclenchement en accord avec une séquence d'impulsions ayant une valeur moyenne depuis une impulsion jusqu'à la prochaine ayant un temps de conduction croissant.

**2.** Système de protection selon la revendication 1, **caractérisé en ce que** la partie du dispositif qui protège contre surtensions transitoires et étendues pour un réseau monophasé est munie de

- un fusible (7)
- Une première source d'alimentation électrique (8) pour l'obtention d'une tension continue établie pour alimenter un contrôleur (16).
- un filtre passe-bas à haute fréquence (9) disposé dans la sortie de la première source d'alimentation électrique (8).
- Une deuxième source d'alimentation électrique (10) pour l'obtention d'une tension continue établie pour alimenter un actionneur (11).
- Une commande (12) adaptant le signal de sortie du contrôleur (16) aux besoins de tension et de courant de l'actionneur (11).
- Un atténuateur de tension (13) qui obtient dans son sortie un signal proportionnel à la tension du réseau, adapté à niveaux de tension admissibles pour le contrôleur (16).
- Une protection contre surtensions transitoires ultra rapides (14) et un filtre passe-bas à haute fréquence (15).
- Un témoin lumineux (12) qui s'active quand il existe de la surtension.
- Un témoin lumineux (13) indiquant la présence de tension à l'entrée du dispositif combiné et le bon fonctionnement du contrôleur.

3.  Système de protection selon la revendication 2, **caractérisé en ce que:**

- La première source d'alimentation électrique (8) se compose de:

C1, R1: Impédance de limitation de courant
D1: Diode redresseuse
C2: Condensateur de filtrage
DS 1: Diode suppresseur ayant une double fonction en plus de limiter la valeur des possibles surtensions transitoires ultra rapides, il agit aussi comme un stabilisateur de tension d'une manière similaire à une diode Zener.

- Le filtre (9) étant connecté à la sortie de la première source d'alimentation électrique (8) comprend:

R2, C3: qui est un filtre passe-bas à haute fréquence.

- la deuxième source d'alimentation électrique (10) se compose de:

D2. Redresse la tension du réseau en demi-onde
Z1: Diode Zener pour réduire la valeur du signal pic du redresseur.
R3: Limite le courant en circulation par la diode Z2.
C4: Condensateur de filtrage permettant une tension continue à ondulation réduite.
Z2: Diode Zener qui limite et établie la tension d'alimentation de l'actionneur.

- L'atténuateur de tension (13) se composant de:

R4, R5 et D3: les résistances réduisent la valeur de la tension de sortie du rupteur aux niveaux adéquats de l'entrée du contrôleur. La diode D3 élimine la partie négative du signal alternatif.

- la partie protégeant contre surtensions transitoires ultra rapides (14) comprend DS2 qui est une diode suppresseur pour surtensions transitoires ultra rapides.
- Le filtre passe-bas à haute fréquence (15) se compose de R6, R7 et C5 et il s'utilise pour les mêmes raisons que dans le cas de la source d'alimentation électrique 1.

4.  Système de protection selon la revendication 2 **caractérisé en ce que** la commande (12) et l'indication d'activation se composent d'un transistor Q, quand la sortie OUT 2 du contrôleur adopte un niveau haut, il permet la circulation du courant par le témoin lumineux (12) el par l'actionneur RL (11), produisant un signal de déclenchement qui actionne le déclencheur électromécanique, la commande (12) est aussi muni d'une résistance R8 avec une taille telle que avec un niveau haut dans la sortie OUT 2 du contrôleur (16) on fournie un courant de base au transistor Q qui est suffisant pour la conduction.

**5.** Système de protection selon la revendication 2, **caractérisé en ce que** l'indication de fonctionnement (17) se compose de: R9, I3:

**6.** Système de protection selon la revendication 4, **caractérisé en ce que** l'actionneur (11) est un relais électromécanique.

**7.** Système de protection selon la revendication 4, **caractérisé en ce que** les actionneurs (11) sont dispositifs en état solide tels que triacs et thyristors.

**8.** Système de protection selon la revendication 1, **caractérisé en ce que** pour des réseaux triphasés le dispositif de protection combiné pour réseaux triphasés se compose d'une partie protégeant contre - surtensions transitoires et une autre partie protégeant contre surtensions transitoires et étendues comprenant

> - un redressement d'entrée et étage de protection (20),
> - une première source d'alimentation électrique (21) du contrôleur (23),
> - un filtre passe-bas à haute fréquence (22) en collaboration avec ladite source d'alimentation électrique (21)
> - un atténuateur de tension (24)
> - un filtre passe-bas à haute fréquence (25) en collaboration avec ledit atténuateur dans son sortie.
> - un contrôleur (23)
> - un indicateur de fonctionnement (26),
> - un actionneur (28)
> - une commande (27) et indication d'activation (12)

**9.** Système de protection selon la revendication, 8 **caractérisé en ce que** le redressement et l'étage de protection d'entrée (20) se compose de:

> D1, D2, D3: Elles agissent comme redresseur triphasé de la tension du réseau.
> D4: elle protège les impulsions de courant du potentiel zéro.
> PTC: il s'utilise comme un dispositif de protection d'entrée au lieu de un fusible, étant donné qu'il évite que les pics de courant circulant par le déclencheur shunt lui endommagent malgré son bon fonctionnement.

**10.** Système de protection selon les revendications 1 à 8, **caractérisé en ce que** le contrôleur est muni d'une entrée avec un convertisseur analog/numérique de façon qu'il puisse obtenir l'information complète sur les plus importants des paramètres de tension d'entrée de manière à produire le déclenchement: Durée de la surtension, valeur rms (Vrms) et valeur pic (Vpk), depuis que la tension d'entrée surpasse les niveaux de tension et temps prédéterminés, le contrôleur génère dans sa sortie OUT 2 un signal adéquat de manière à déclencher le déclencheur électromécanique, et le dispositif est également adéquat pour réaliser la programmation en circuit.

**11.** Système de protection selon la revendication 8, **caractérisé en ce que** l'actionneur (28) se compose d'un transistor Q du type MOSFET, contrôlé par sa tension de grille et en plus il est muni de.
R7: on l'utilise pour éviter oscillations quand le photo-transistor de l'optocoupleur O1 est coupé, en évitant ainsi le déclenchement indésirable.
V4, D5: Le transistor agit sur une charge inductive et, donc, quand le flux de courant s'interrompe, des surtensions sont créés, et afin d'éviter qu'elles affectent au transistor, celles-ci sont limitées par l'intermédiaire de une varistance V4 et une diode D5.

**12.** Système de protection selon la revendication 8, **caractérisé en ce que** la commande (27) se compose de une photo-diode O1, une résistance R6 et un indicateur d'activation I2 de façon à ce que quand on détecte une surtension transitoire ou étendue qui surpasse valeurs et temps prédéterminées, la tension de sortie OUT 2 du contrôleur adopte niveaux hauts, circulant courant par la photo diode 01, R6 et l'indicateur d'activation 12, causant la saturation du phototransistor O1 et on applique une tension qui est environ égal à la tension de la diode Zener DZI à la grille du transistor Q, en atteignant ainsi sa conduction et actionnement du déclencheur, où la tension de Zener est obtenue sur la base de la tension triphasée redressée SD+, par l'intermédiaire de R5 et DZI, donc même dans le cas où deux parmi les trois phases se perdent, on fourni tension pour agir sur le transistor Q et sur le déclencheur shunt.

**13.** Système de protection selon la revendication 12, **caractérisé en ce que** la séquence d'impulsion reçue par les déclencheurs électromécaniques présente un cycle de fonctionnement réduit d'environ (10%) et augmentations à chaque impulsion jusqu'à il atteint un maximum d'environ (90%).

**14.** Système de protection selon la revendication 1, **caractérisé en ce que** le temps d'actionnement variable et programmable qui évite un déclenchement indésirable se compose d'une zone (18) sans actionnement du dispositif de commutation, par opposition à une autre zone (19) d'activation du dispositif de commutation, où les temps de la zone sans actionnement sont inferieurs à une courbe qui établie le limite maximum du temps d'actionnement $t_A$ et qui change selon l'état de la technique.

**15.** Système de protection selon la revendication 10, **caractérisé en ce que** le déclencheur électromécanique collaborant avec le dispositif de commutation est un déclencheur shunt.

**16.** Système de protection selon la revendication 10, **caractérisé en ce que** le déclencheur électromécanique collaborant avec le dispositif de commutation est un déclencheur à minimum de tension agissant ne seulement dans le cas de surtension mais aussi dans sub-tension.

**17.** Système de protection selon la revendication 8, **caractérisé en ce que** le déclencheur shunt du commutateur électromécanique se déclenche même dans le cas où la tension d'une ou deux phases se perdre et, donc, le signal de déclenchement se génère à partir du signal triphasé.

# FIG.1

# FIG.2

FIG.3

FIG.4

FIG.5

FIG.6

EP 2 131 468 B1

**FIG.7**

EP 2 131 468 B1

FIG.8

FIG.9

L1:265V
L2:265V
L3:265V

FIG.10

V1:255V
V2:0V
V3:0V

**FIG.11**

$$b1 = \frac{T2a}{T2} = 0.1$$

$$T2 \ll T1$$

$$bn = \frac{T2a}{T2} = 0.9$$

**FIG.12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2170671 B1
- EP 1401075 A
- EP 1701424 A1